# EUROPEAN PATENT APPLICATION

(11) **EP 2 757 520 A1**
(43) Date of publication of application: **23.07.2014**
(21) Application number: 12831944.9
(22) Date of filing: 29.08.2012
(51) Int. Cl.: G06Q 50/10

(54) **INFORMATION MANAGEMENT DEVICE, NETWORK SYSTEM, INFORMATION MANAGEMENT PROGRAM, AND INFORMATION MANAGEMENT METHOD**

(30) Priority: 13.09.2011 JP 2011199202
(71) Applicant: Omron Corporation, Kyoto-shi, Kyoto 600-8530 (JP)
(72) Inventor: KAWAMURA Atsushi, Kyoto-shi Kyoto 600-8530 (JP); HISANO Atsushi, Kyoto-shi Kyoto 600-8530 (JP); KASAI Kazuki, Kyoto-shi Kyoto 600-8530 (JP)
(74) Representative: Kilian Kilian & Partner
(86) International application number: PCT/JP2012/071768
(87) International publication number: WO 2013/038905

(57) **Abstract**

When receiving a use request of information from an information use device (3), an information selection unit (31) selects information to be transmitted to the information use device (3). The information selection unit (31) selects information based on provision side information stored in a provider contract DB (13) and use side information stored in a user contract DB (14). A communication unit (12) transmits the information selected by the information selection unit (31) to the information use device (3). Further, an evaluation value calculation unit (33), for each piece of the information provided from the information provision device (2), calculates an evaluation value based on transmission performance that the communication unit (12) has transmitted the information to the information use device (3).

## Description

### Technical Field

The present invention relates to a technology for relaying information between an information provision device that provides information and an information use device that uses information to be provided, and evaluating a value of the information and calculating a magnitude of the value of the information.

### Background Art

Conventionally, a network system has been used, the network system connecting, through a network, a plurality of information provision devices that provide information, a plurality of information use devices that selectively use information to be provided, and an information management device that manages the relay of the information between these devices. The information management device is provided with various types of information. The information use devices request provision of information from the information management device. The information management device provides the information use devices with information in response to this request.

In addition, some information management devices, regarding the information provided from the information provision devices, assess the value (evaluation value) of the information and pay a provider of the information a consideration article corresponding to the magnitude of the value of the information

(see Patent Literature 1). Thus, this Patent Literature 1 discloses provided information is exchanged for the consideration article corresponding to the magnitude of the evaluation value obtained by assessing the provided information.

Moreover, other information management devices, with respect to a software user, charge a license fee set corresponding to the state of use of the user (see Patent Literature 2).

### Citation List

### Patent Literature

Patent Literature 1: Japanese Patent No. 2956690
Patent Literature 2: Japanese Patent Laid-Open Publication No. 2007-149017

### Summary of the Invention

### Technical Problem

However, regarding the evaluation value of the information provided from the information provision devices, as the information is used by more information use devices, a degree of benefit may become higher and the evaluation value may also become larger. Patent Literature 1 does not disclose a configuration in which the magnitude of the evaluation value with respect to information is calculated and determined in consideration of the use performance of the information, but discloses a configuration in which the magnitude of the evaluation value with respect to information is calculated and determined according to the content of the information. Therefore, the evaluation value of the information that has not been comparatively used by the information use devices may have been calculated larger than average, or the evaluation value of the information that has been comparatively used by the information use devices may have been calculated smaller than average.

In such a case, when a person (provider) who provides information by the information provision device is dissatisfied with the magnitude of the evaluation value (paid consideration article) determined with respect to provided information, the person may stop the provision of the information. Furthermore, as the information provision devices that stop the provision of information increase, the total amount of the information that is provided to the information management device decreases, so that information with a high degree of received benefit cannot be provided to the information use devices.

An object of the present invention is to provide a technology by which an information provider can be prevented from feeling dissatisfied and information can be effectively exploited by determining the magnitude of an evaluation value with respect to provided information in consideration of the use performance of the information.

### Solution to Problem

In order to solve the above described problems and achieve the forgoing object, an information management device according to the present invention is configured as follows.

A provision side information storage unit, regarding information provided from an information provision device connected in a communicable manner through a network, stores provision side information including a use restriction of the Information. The provision side information includes, for example, a type of an application program for which use of information is permitted and an attribute of a user as a use restriction and also includes a kind of an information provision device that has acquired the information, a type of the information, and a recognition rate. The use restriction may also include a type of an application program and an attribute of a user for which use of information is not permitted.

In addition, a use side information storage unit, regarding information of which use is desired by an information use device connected in a communicable manner through the network, stores use side information including a use mode of the information. The use side information includes, for example, a type of an application program that uses information and an attribute of a user as the use mode of the information and also includes a type of information desired to be used and a recognition rate.

When receiving a use request of information from the information use device, an information selection unit selects information to be transmitted to the information use device. The information to be selected is information of which the use is not restricted in the use mode based on the provision side information stored in the provision side information storage unit and the use side information stored in the use side information storage unit. Specifically, selection of information to be transmitted to the information use device can be performed based on a contract exchanged with the provider of information and a contract exchanged with the user of information.

A transmission unit transmits the information, selected by the information selection unit to the information use device.

Additionally, an evaluation value calculation unit, regarding the information provided from the information provision device, calculates an evaluation value based on transmission performance that the transmission unit has transmitted the information to the information use device.

In this way, the magnitude of the evaluation value with respect to the information provided from the information provision device is determined in consideration of the use performance of the information. For example, as the information provided from the information provision device is more frequently used for execution of an application in the information use device or is more frequently read by users, an evaluation value is calculated larger. Alternatively, the magnitude of an evaluation value may be calculated in consideration of the magnitude of benefit (the degree of received benefit) obtained by using this information, the novelty of information, and the like. Thus, the provider who provides information by the information provision device can be suppressed from feeling dissatisfied with the evaluation value of provided information. This can fully ensure the total amount of the information provided from the information provision device and can provide information with a high degree of received benefit to the information use device.

In addition, with a configuration in which, with respect to the provider of information, a consideration article corresponding to the magnitude of the calculated evaluation value is settled, the provider and information provided from the provider can be increased. Moreover, according to this, the reliability of the information provided to a user improves and the benefit that the user obtains also becomes larger. The consideration article may be monkey or may be a point that can be used for a certain system, a coupon, or the like.

Furthermore, the information selection unit may preferably be configured to, in a case in which there are a plurality of pieces of information of which use is not restricted with respect to the use mode of the information included in the use request received from the information use device, transmit a brief summary of the pieces of information to the information use device and select information designated by the information use device as information to be transmitted. Such a configuration can let a user select information.

### Advantageous Effects of Invention

According to the present invention, by determining the magnitude of an evaluation value with respect to provided information in consideration of the use performance of the information, an information provider can be prevented from feeling dissatisfied and the information can be effectively exploited.

### Brief Description of the Drawings

Fig. 1 is a block diagram illustrating a schematic configuration of a network system according to a preferred embodiment of the present invention.
Fig. 2 is a block diagram illustrating a configuration of a main part of an information management device.
Fig. 3 is a schematic view illustrating a configuration of a provider contract DB.
Fig. 4 is a schematic view illustrating a configuration of a user contract DB.
Fig. 5 is a schematic view illustrating a configuration of a management information DB.
Fig. 6 is a schematic view illustrating a configuration of an information record DB.
Fig. 7 is a schematic view illustrating a configuration of a use history DB.
Fig. 8 is a schematic view illustrating a functional configuration of the information management device.
Fig. 9 is a flowchart illustrating an operation of the information management device in a provision contract process.
Fig. 10 is a flowchart illustrating an operation of the information management device in a use contract process.
Fig. 11 illustrates a display example of an input screen concerning a type selection in an information use device and the like.
Fig. 12 is a flowchart illustrating an operation of an information management device in a management information DB update process.
Fig. 13 is a flowchart illustrating an operation of the information management device in an information use process.
Fig. 14 is a flowchart illustrating a settlement process in the information management device.

### Description of Embodiments

Hereinafter, a network system as another preferred embodiment of the present invention is described.

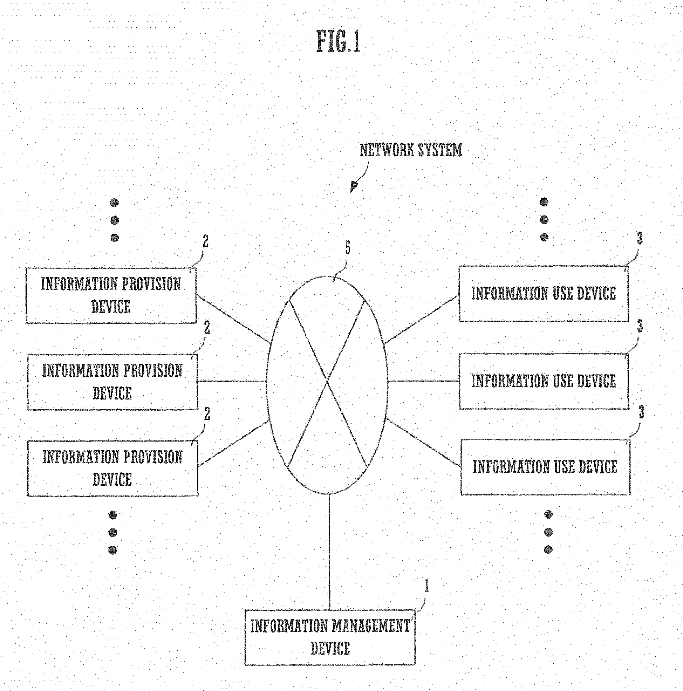

Fig. 1 is a block diagram illustrating a schematic configuration of a network system according to a preferred embodiment of the present invention. This network system is equipped with an information management device 1, a plurality of information provision devices 2, and a plurality of information use devices 3. The information management device 1, the information provision devices 2, and the information use devices 3 are connected in a communicable manner through a network 5.

The information provision device 2 is not a specific kind of device, but, for example, a mobile phone, an on-vehicle camera, amonitoring camera or an air conditioning control system, and may preferably be equipment having a configuration that acquires some information such as an image, temperature, humidity, and illuminance. In addition, the information provision device 2 may be configured to execute a predetermined process by using the information (acquired information) to be provided to the information management device 1 or may be configured not to use the information in the own device. The information provision device 2 provides (uploads) acquired information to the information management device 1. Moreover, a person who operates and manages the information provision device 2 (hereinafter referred to as the provider), regarding information to be provided to the information management device 1, can restrict the use of the information according to a type of a usable application program (hereinafter simply referred to as an application), an attribute (an individual, a corporation, etc.) of a user, and so on.

The information use device 3 is an information, processing device such as a personal computer, a mobile phone, and the like that a user who uses the information that the information provision device 2 provides possesses. The information use device 3, from this information management device 1, receives the information with which the information provision device 2 has provided the information management device 1. The information use device 3 includes an application installed therein, the application using information that the information provision device 2 provides.

The information management device 1 manages: provider contract information based on a contract, exchanged with a provider, concerning a provision of the information from the information provision device 2; user contract information based on a contract, exchanged with a user, concerning use of the information in the information use device 3; and the like. This provider contract information is equivalent to the provision side information defined by the present invention and the user contract information is equivalent to the use side information defined by the present invention. In addition, the information, management device 1, based on the provider contract information and the user contract information, acquires information from the information provision device 2 and transmits (provides) information to the information use device 3. The information management device 1 does not transmit the information of which use is not permitted by the use restriction of the relevant information, to the information use device 3. In other words, the information management device 1 transmits the relevant information of which the use is permitted by the use restriction of the information, to the information use device 3. In this way, the information management device 1 executes information management and information relay, between the information provision device 2 that provides information and the information use device 3 that uses provided information.

In addition, whenever the information management device 1, for each information use device 3, transmits information to the information use device 3, the information management device 1 executes a charging process in which a value corresponding to the transmitted information is charged. Furthermore, the information management device 1, for each information provision device 2, calculates an evaluation value of the information, provided from the information provision device 2 and executes a settlement process by using a consideration article corresponding to the magnitude of the evaluation value.

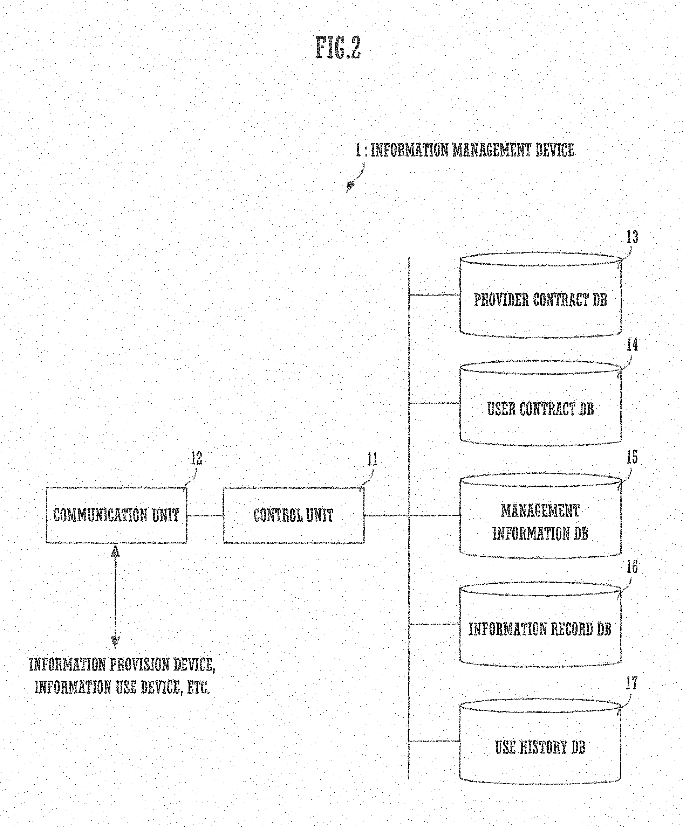

Subsequently, the configuration of this information management device 1 will be described below. Fig. 2 is a block diagram illustrating a configuration of a main part of the information management device. The information management device 1 includes: a control unit 11, a communication unit 12, a provider contract database 13 (provider contract DB 13), a user contract database 14 (user contract DB 14), a management information database 15 (management information DB 15), an information record database 16 (information record DB 16), and a use history database 17 (use history DB 17).

The control unit 11 controls the operation of the main body of the information management device 1.

The communication unit 12, through the network 5, executes communication with the information provision device 2 or with the information use device 3.

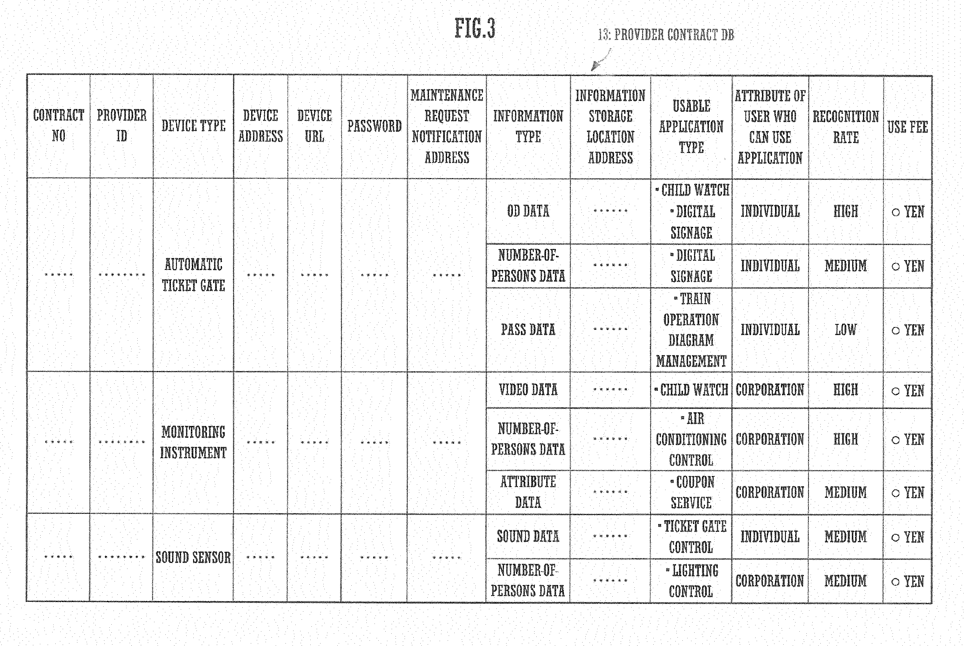

The provider contract DB 13 registers therein the content of a contract concerning a provision of information exchanged with a provider. Fig. 3 is a schematic view illustrating the configuration of the provider contract DB. The provider contract DB 13, for each contract concerning a provision of information with a provider, registers therein a record in which a contract number (contract No), a provider ID, a device type, a device address, a device URL, a password, a maintenance request notification address, an information type, an information storage location address, a usable application type, an attribute of a user who can use an application, a recognition rate, and a use fee are associated with one another. The provider exchanges such a contract for each piece of information to provide.

The contract number is a unique number given individually to each contract concerning a provision of information with a provider. The provider ID identifies the provider. The device type is a type of the information provision device 2 that acquires information to be provided, for example, an automatic ticket gate, a monitoring instrument, an air conditioning control system, a monitoring camera, a sound sensor, a mobile phone, and the like. The device address is an IP address of this device. The device URL is a URL (UniformResource Locator) of this device.

The password, when executing the change and updating of this contract, is a character string that an operator has to input in order to confirm whether the operator is the provider. The password is set by the provider at the time of the contract.

The maintenance request notification address is a mail address designated by the provider and is a transmission destination (destination address) of mail concerning a maintenance request with respect to the information provision device 2. The maintenance request is made, for example, when information is not provided from the information provision device 2.

The information type is a type of information provided from the information provision device 2, and shows: information, (raw data) that the information provision device 2 has acquired, such as video data, sound data, and the like; and processed data (metadata) obtained by processing the raw data that the information provision device 2 has acquired, such as OD (Origin Destination) data, number-of-persons data, and attribute data (attribute data indicating an adult, a child, a female, a male, and so on).

The information storage location address shows an address on a recording medium (information record DB 16 to be described below) that records and stores information provided from the information provision device 2.

The usable application type shows a type of an application that is permitted for the use of information. In addition, the attribute of a user who can use an application shows an attribute (an individual, a corporation, etc.) of a user who is permitted for the use of information. This usable application type and the attribute of a user who can use an application are included in information use restriction that the provider has set at the time of the contract . In addition, while, in this preferred embodiment, a type of an application and an attribute of a user that are permitted for use are registered as use restriction, a type of an application and an attribute of a user that are not permitted for use may be registered.

The recognition rate shows the accuracy of information and classifies the accuracy into three levels: high, medium, and low based on an error (sensing accuracy of information in the information provision device 2), etc. that are included in the information acquired in the information provision device 2. That is, the recognition rate is the reliability of information to be provided. The use fee is the amount charged to the user who has used the information. This use fee is equivalent to the piece rate value of the information defined by the present invention. The information management device 1 determines the piece rate value of the information mainly based on the degree of benefit of the information. As the piece rate value of information is higher, the degree of benefit of the information is higher. The degree of benefit is determined based on the reliability mainly based on the accuracy of the information, the use frequency of the information, the degree of received benefit obtained by the use of the information, and the like. The degree of received benefit is fed back to the information management device 1 mainly from the user of the information. While, in this preferred embodiment, the information piece rate is set to a fee per a single use of the information, the information piece rate may be set to a fee per MB of information amount or may be set in another form.

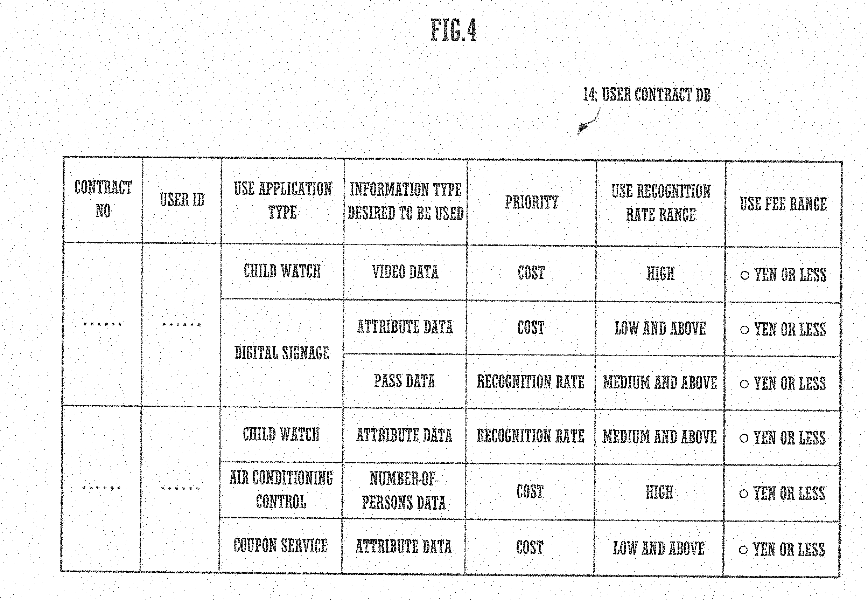

The user contract DB 14 registers therein the content of the contract concerning use of the information exchanged with a user. Fig. 4 is a schematic view illustrating the configuration of the user contract DB. The user contract DB 14 registers therein, for each contract concerning a provision of information with a user, a record in which a contract number (contract No), a user ID, a use application type, a priority, a use recognition rate range, and a use fee range are associated with one another.

The contract number is a unique number individually given to a contract concerning a provision of information with a user. The user ID identifies the user. The use application type is a type of an application for which the user uses the provided information. The information type desired to be used shows the type of information to be used.

The priority, for use of information, shows whether cost is given priority or a recognition rate is given priority. The use recognition rate range defines the lower limit of the recognition rate of information to be used. The use fee range defines the upper limit of the fee of information to be used. The priority, the use recognition rate range, and the use fee range are set by the user at the time of the contract.

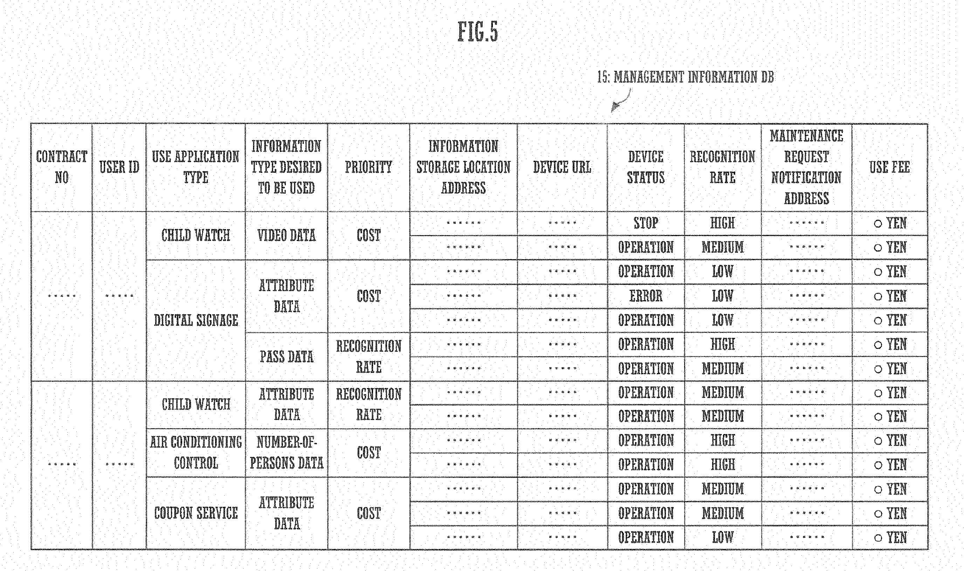

The management information DB 15 is generated based on the content of registration of the provider contract DB 13 and the user contract DB 14 that have been described above. Fig. 5 is a schematic view illustrating the configuration of the management information DB. This management information DB 15, for each user, registers therein a record in which a contract No (contract number of a user), a user ID, a use application type, an information type desired to be used, a priority, an information storage location address, a device URL, a device status, a recognition rate, a maintenance request notification address, and a use fee are associated with one another. The control unit 11, at a predetermined timing (at midnight every day, for example), generates this management information DB 15 based on the content of registration of the provider contract DB 13 and the user contract DB 14 that have been described above. Accordingly, the management information DB 15 reflects an update of the provider contract DB 13 and the user contract DB 14 at a predetermined timing (timing when the management information DB 15 is generated).

It should be noted that the management information DB 15 includes device status information. This is confirmed by communication with the corresponding information provision device 2.

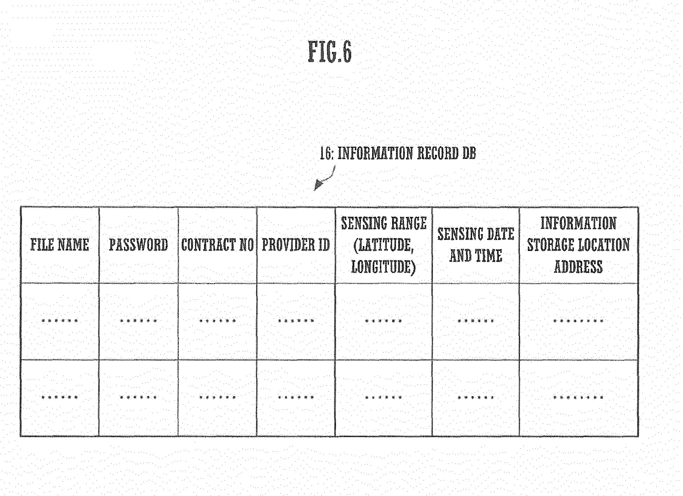

The information record DB 16 is the database that records and manages the information provided from the information provision device 2. Fig. 6 is a schematic view illustrating the configuration of management information in the information record DB. The information record DB 16 registers therein a record in which a file name, a password, a contract No (contract number of a provider), a provider ID, a sensing range, a sensing date and time, and an information storage location address are associated with one another.

The file name is the file name given to the information provided from the information provision device 2. The password, the contract No (contract number of a provider), the provider ID, and the information storage location address are registered in the provider contract DB 13. The control unit 11 also generates this information record DB 16 at a predetermined timing, referring to the above described provider contract DB 13. The timing when the information record DB 16 is generated may be the same as or may be different from the timing when the management information DB 15 is generated.

The sensing range shows the range in which information provided by the information provision device 2 is acquired. Additionally, the sensing date and time show the date and time when information provided by the information provision device 2 has been acquired. This preferred embodiment exemplifies a case in which the sensing range is registered with latitude and longitude. For example, in a case in which the information is an image imaged by a fixed camera, the sensing range is shown with latitude and longitude that show the center of the imaged image. In the case of an image imaged by a fixed camera, the sensing range may be set in the information provision device 2 in advance. Moreover, the information provision device 2, in the case af an image imaged by a mobile terminal with a camera such as a mobile phone, maybe configured to sense a pasition of a terminal body by a GPS (Global Positioning System) function added to the mobile terminal and calculate a sensing range by using an inclination of the terminal body sensed by a gyroscope function added to this mobile terminal, an imaging magnification (focal length), and so on.

The information provision device 2, when providing information to the information management device 1, notifies the sensing range and the sensing date and time of the information. When recording the information provided from the information provision device 2 in the management information DB 15, the information management device 1 creates a record concerning the management information of the information and stores the record.

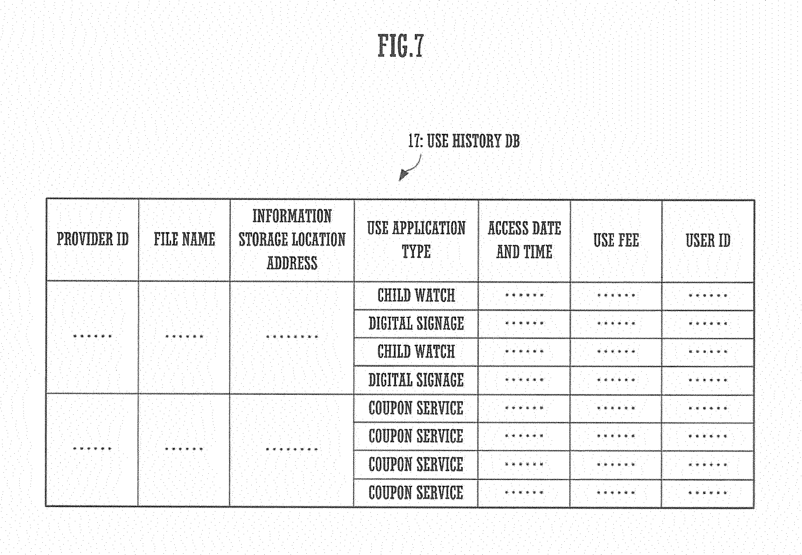

The use history DB 17 is the database in which the use history of information provided from a provider is registered. Fig. 7 is a schematic view illustrating the configuration of the use history DB. The use history DB 17 registers therein a record in which a provider ID, a file name, an information storage location address, a use application type, an access date and time, a use fee, and a user ID are associated with one another.

In the use history DB 17, whenever a user uses information, with respect to the used information, a use application type, an access date and time, and a user ID are additionally registered. This use history DB 17 is used, with respect to a provider, mainly for calculation of the magnitude of a consideration article corresponding to the use of provided information and for calculation of a fee to be charged to a user corresponding to the use of the information.

It should be noted that, in Fig. 3 to Fig. 7, the columns indicated by "...." are columns in which an illustration is simply omitted.

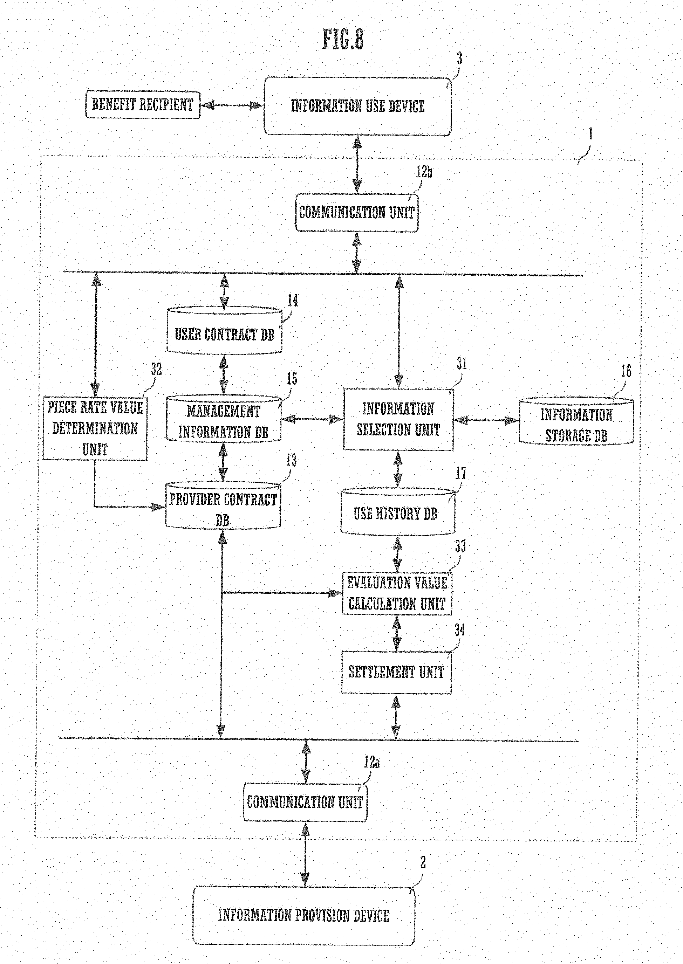

Fig. 8 is a schematic view illustrating the functional configuration of the information management device. In Fig. 8, the configurations illustrated in Fig. 1 or Fig. 2 are denoted by the same reference numerals. The control unit 11 of the information management device 1 has functions of an information selection unit 31, a piece rate value determination unit 32, an evaluation value calculation unit 33, and a settlement unit 34 that are illustrated in Fig. 8.

It is to be noted that communication units 12a and 12b illustrated in Fig. 8 are configured to be equivalent to the communication unit 12 described above. In Fig. 8, the communication unit 12a controls communication with the information provision device 2, and the communication unit 12b controls communication with the information use device 3. The benefit recipient illustrated in Fig. 8 is a person who receives a certain benefit by a user who has used information with the information use device 3. For example, the benefit recipient includes a restaurant that a user who used information to look for a restaurant has visited, a parking lot that a user who used information to look for a parking lot, and the like.

The information selection unit 31, with respect to a use request of information from a user, selects information to be transmitted to this user. The piece rate value determination unit 32, for each piece of the information provided from an information provider, determines a piece rate value of the information. The piece rate value determination unit 32, as described above, determines a piece rate value of the information mainly based on the reliability mainly based on the accuracy of the information, the use frequency of the information, and the degree of received benefit obtained by the use of the information.

The evaluation value calculation unit 33, regarding the information provided from the information provision device 2, calculates the magnitude of the evaluation value of the information. The settlement unit 34 executes a settlement process in which an consideration article corresponding to the magnitude of the evaluation value of the information calculated by the evaluation value calculation unit 33 is paid to the information provision device 2 that has provided the information.

Subsequently, description will be made of the operation of this network system.

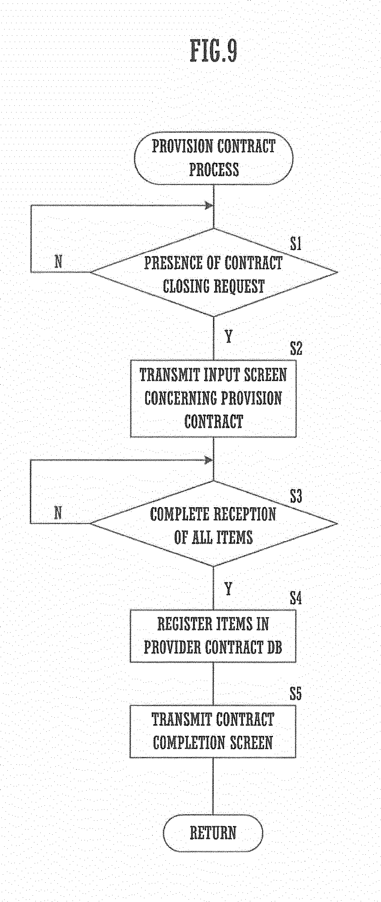

To begin with, a process (provision contract process) executed when a contract concerning a provision of information is exchanged with a provider, will be described. Fig. 9 is a flowchart illustrating the operation of the information management device in this provision contract process.

The information management device 1 waits for a closing request of a contract concerning a provision of information to be transmitted from a provider through the network 5 (s1). The provider who closes the contract concerning a provision of information performs user registration in advance and owns a provider ID. The provider operates the information provision device 2 that actually acquires information to be provided, a personal computer, or the like, and transmits a closing request of the contract concerning the provision of information to the information management device 1. The closing request includes the provider ID.

The information management device 1, when receiving the closing request of the contract concerning The provision of information in the communication unit 12, transmits an input screen concerning a provision contract of information to the device that has transmitted this closing request (s2). The input screen to be transmitted in s2 includes input columns for a device type, a device address, a device URL, a password, a maintenance request notification address, an information type (or a plurality of information types), a usable application type, an attribute of a user who can use an application, and a recognition rate. In other words, this input screen is a screen in which input for items to be registered in the provider contract DB 13 is requested. The provider executes to each input column and sends this input back to the information management device 1. In this preferred embodiment, as described above, since the information management device 1 is configured to determine a use fee of information, a provider does not input a use fee.

It should be noted that a provider may input a base amount (desired amount) of the use fee of information and the information management device 1 may determine the use fee, referring to the desired amount.

The information management device 1, regarding all the items necessary for closing of a contract concerning a provision of information, when receiving the content of all the items (s3), determines a contract number and an address (information storage location address) on the recording medium in which the information for which the contract has been closed this time is recorded and stored, and registers the contract number and the address in the provider contract DB 13 (s4). In addition, the information management device 1 transmits a screen in which the completion of the contract is notified to the device that has transmitted the closing request of the contract concerning the provision of information this time (s5), and then returns the process to s1. In s5, the information management device 1 transmits the content of the contract concerning the provision of information this time to the provider.

In this way, the provider, when closing a contract concerning a provision of information, can set a usable application type and an attribute of a user who can use an application as a use restriction to the information.

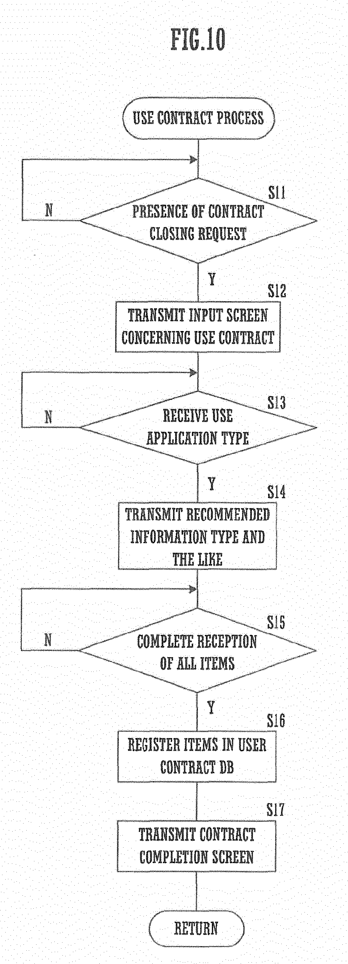

Then, a process (use contract process) executed when a contract concerning use of information is exchanged with a user, will be described. Fig. 10 is a flowchart illustrating the operation of the information management device in the use contract process. The information management device 1 waits for a closing request of a contract concerning use of information to be transmitted from a user through the network 5 (s11). The user who closes the contract concerning use of information performs user registration in advance and owns a user ID. The user operates the information use device 3 or the like that actually receives the provision of information and transmits a closing request of the contract concerning use of information to the information management device 1. The closing request includes the user ID.

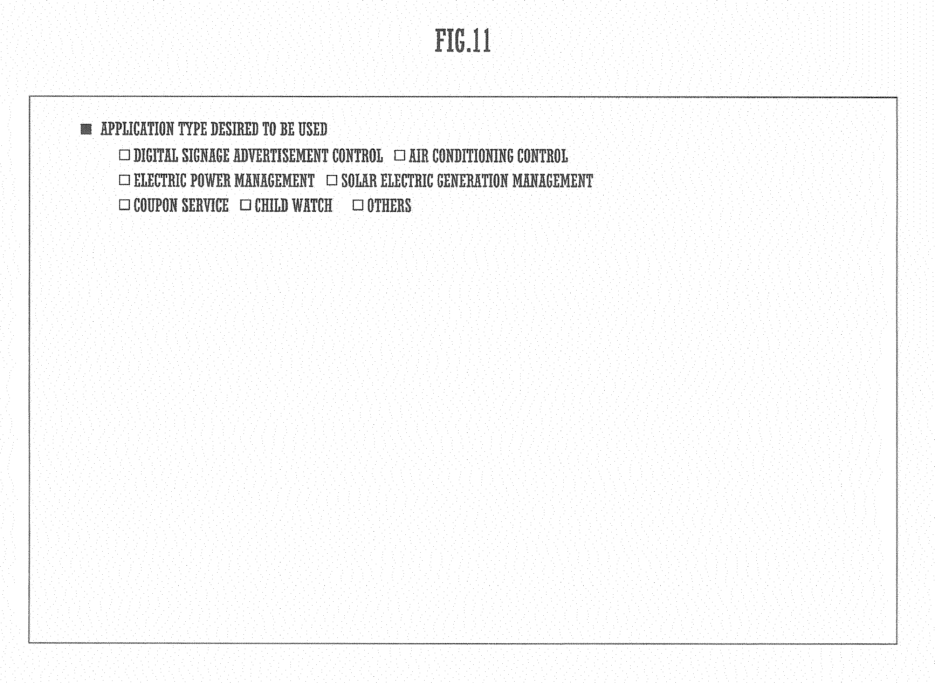

The information management device 1, when receiving the closing request of the contract concerning use of information in the communication unit 12, and transmits an input screen concerning a type selection of an application using information to the information use device 3 or the like that has transmitted this closing request (s12). Fig. 11 illustrates a display example of an input screen concerning a type selection that is transmitted from the information management device 1 in s12, in the information use device 3 and the like.

The user, in the input screen concerning this type selection, selects a type of an application using information and transmits the selected type to the information management device 1.

The information management device 1, corresponding to the type of the application using the information transmitted from the information use device 3, mainly presents a type of information recommended for use of information, and transmits the input screen in which input of necessary items in a use contract is requested (s13, s14).

The user, in the input screen that the information management device 1 has transmitted in s14, inputs a type of information desired to be used, the upper limit of a use fee, a priority (cost or a recognition rate), etc.

The information management device 1, when receiving all the items necessary for closing of a contract concerning use of information (s15), determines a contract number, and registers the determined contract number in the user contract DB 14 (s16). In addition, the information management device 1 transmits a screen in which the completion of the contract is notified to the device that has transmitted the closing request of the contract concerning the use of information this time (s17), and then returns the process to s11. In s17, the information management device 1 transmits the content of the contract concerning the use of information this time to the user.

In this way, the user, when closing a contract concerning use of information, can set a type of information to be used, the upper limit of a use fee, a priority, and so on, according to the desire of the user.

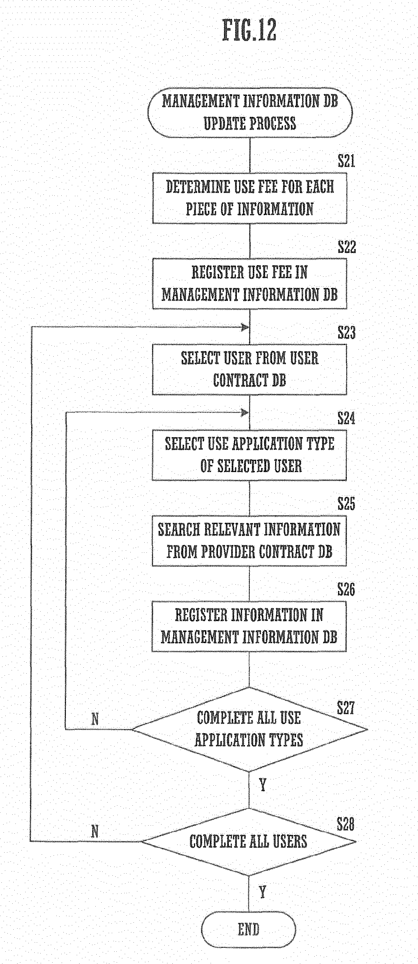

Subsequently, description will be made of a process of updating the management information DB 15 based on the provider contract DB 13 and the user contract DB 14. Fig. 12 is a flowchart illustrating a management information DB update process.

The information management device 1, for each piece of the information provided from the information provision device 2, determines a use fee of the information (s21). In s21, the degree of benefit is assessed mainly based on the reliability mainly based on the accuracy of the information, the use frequency of the information, the degree of received benefit associated with the use of the information, and then a use fee is determined based on this degree of benefit. The degree of received benefit is information fed back to the information management device 1 from a user and a benefit recipient. The information management device 1, for each piece of information, records the use fee determined in s21 in the provider contract DB 13 (s22). By execution of the processes concerning s21 and s22, for each piece of the information provided from the information provision device 2, the use fee is updated.

It is to be noted that the processes concerning s21 and s22 may be executed not at an update timing of the management information DB 15 but at other timings.

The information management device 1 selects one user registered in the user contract DB 14 (s23). The information management device 1, for the user selected in s23, selects one use type application for which this user has closed the use contract (s24). The information management device 1 executes a search process in which information that can be provided to the use type application selected in s24 is all extracted from the provider contract DB 13 (s25). In s25, the information management device 1 searches information that can be provided based on a type of an application and an attribute of a user that are permitted for the provision that a provider has set at the time of the contract. In other words, the provider, by the use restriction of information set at the time of the contract, can restrict a provision of information to the user. The information management device 1 registers the information that can be provided and has been searched in s25 in association with the use type application selected in s24 in the management information DB 15 (s26).

The information management device 1, regarding the user selected in s23, with respect to all types of a use application for which the user has closed the use contract, determines whether or not the processes concerning the above described s24 to s26 have been executed (s27). The information management device 1, in s27, with respect to the relevant user, if there is a type of a use application for which the processes concerning s24 to s26 are not completed, returns the process to s24 and repeats the above described processes.

In addition, the information management device 1, in s27, with respect to the relevant user, if there is no type of a use application for which the processes concerning s24 to s26 are not completed, with respect to all users registered in the user contract DB 14, determines whether or not the processes concerning s24 to s27 have been executed (s28). The information management device 1, in s28, if there is a user for whom the processes concerning s24 to s27 are not completed, returns the process to s23 and repeats the above described processes.

As described above, when the contract (provision contract process illustrated in Fig. 9) concerning a provision of information with a provider and the contract (use contract process illustrated in Fig. 10) concerning use of information with a user are executed, the provider contract DB 13 and the user contract DB 14 are updated. The information management device 1, by repeatedly executing the management information DB update process illustrated in this Fig. 12 at a predetermined timing, updates the management information DB 15 corresponding to the update (a new provision contract or use contract) of the provider contract DB 13 and the user contract DB 14.

Then, description will be made of a process (information use process) performed when a user uses information provided from the information provision device 2 in an application.

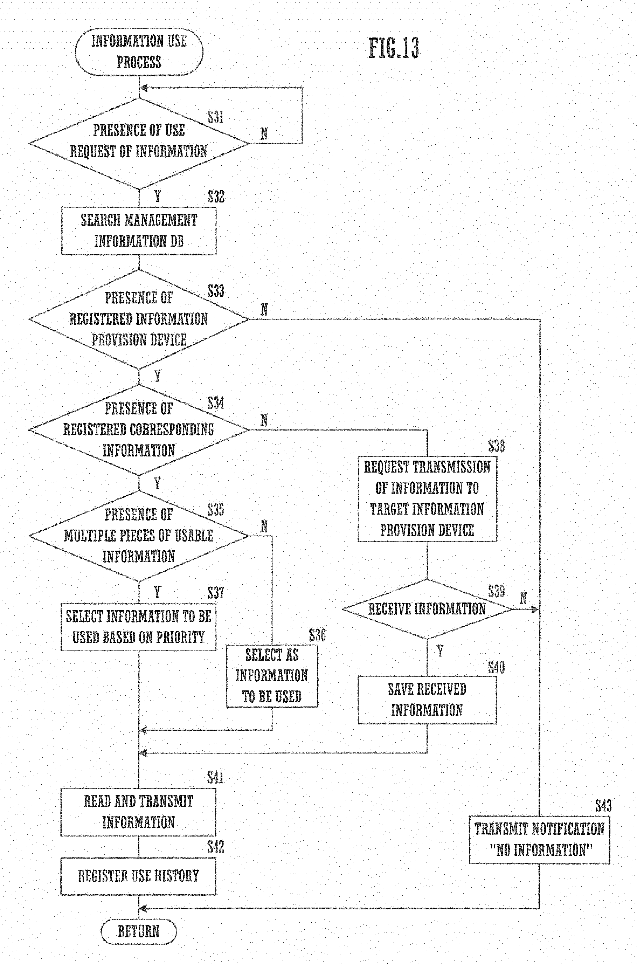

Fig. 13 is a flowchart illustrating this information use process in the information management device. The information management device 1, in the communication unit 12, waits for a use request of information to be transmitted (s31). The information management device 1, when receiving the use request of information, searches the management information DB 15 by using the user ID and the use application type that are included in this use request (s32). The information management device 1, in s32, with respect to the use type application of the user ID of the user who has requested the use of information this time, searches an information provision device 2 that provides usable information.

The information management device 1, if an information provision device 2 that provides usable information has not been registered in the management information DB 15 (s33), proceeds to s43 that is described later.

The information management device 1, if an information provision device or a plurality of information provision devices 2 that provide usable information have been registered in the management information DB 15, determines whether information corresponding to the sensing range (latitude, longitude) and the sensing time included in the use request of the information that is provided from these information provision devices 2 and has been received this time is registered in the information record DB 16 (s34).

The information management device 1, in s34, if information corresponding to the use request of the information that has been received this time is registered in the information record DB 16, determines whether or not the registered usable information is one piece or more than one piece (s35). On one hand, the information management device 1, if usable information is one piece, selects the information as information to be used (s36). On the other hand, the information management device 1, if usable information is more than one piece, selects information to be used among a plurality of pieces of information (s37).

In s35, for example, the information management device 1 may be configured to select information of which the use fee is the lowest if cost is given priority in the use contract of this user and to select information of which the recognition rate is the highest if a recognition rate is given priority in the use contract of this user. The information management device 1 may also be configured to transmit the recognition rate, the use fee, the sensing range, the sensing date and time, and the like of each piece of information to the information use device 3, and to receive the designation of information to be selected from this information use device 3.

In addition, the information management device 1, when determining in s34 that information corresponding to the use request of the information that has been received this time is not registered in the information record DB 16, transmits a notification requesting a provision of information to the information provision device 2 (information provision device 2 searched in s32) that has contracted to provide this information (s38). The information management device 1, when receiving information from the information provision device 2 that has requested for transmission of information in s38, registers the information in the information record DB 16 (s39, s40).

The information management device 1, with respect to the information use device 3 that has transmitted the use request this time, transmits information to be provided (information selected in s36 or s37, or information registered in the information record DB 16 in s39), creates a use history associated with the transmission of this information, and registers the use history in the use history DB 17 (s41, s42).

It is to be noted that, in s33, if the information management device 1 has determined that information provision device 2 that provides usable information is not registered in the management information DB 15 or if the information requested in s38 has not been transmitted from any of the information provision devices 2, the information management device 1, with respect to the information use device 3 that has transmitted the use request this time, notifies that transmission of information cannot be performed (s43), and ends the process. In this case, the use history of the information is not registered in the use history DB 17.

In this way, in this network system, the provider of information, regarding the information that the information provision device 2 provides, can set the use restriction.

In addition, the user of information can designate information to be used mainly by the recognition rate and the use fee of information.

Moreover, the information management device 1 generates the management information DB 15 in advance based on the content of registration in the provider contract DB 13 and the user contract DB 14, and, with respect to a use request of information from the information use device 3, can shorten time required for selection of an information provision device 2 that provides information that can be provided to this information use device 3, so that time required for selection of information to be provided to the information use device 3 can be shortened.

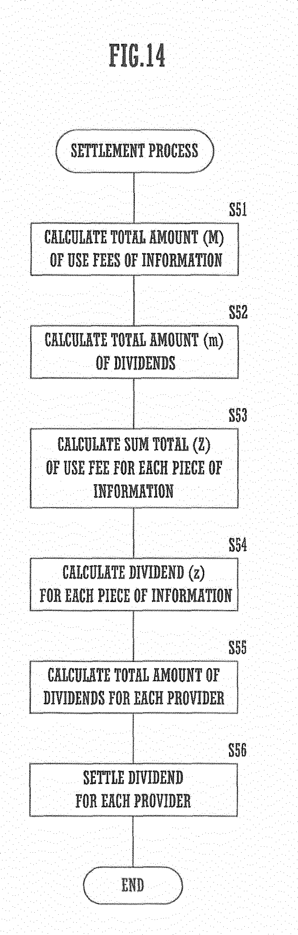

Subsequently, a description will be made of a settlement process of, for each piece of the information provided from the information provision device 2, calculating an evaluation value of the information and settling a consideration article of which the magnitude corresponds to a calculated evaluation value with respect to a provider. Fig. 14 is a flowchart showing this settlement process. This settlement process is executed, on the first every month, for example, based on the use performance of the previous month.

The information management device 1 refers to the use history DB 17 and calculates the total amount (M) of the use fees of information of the previous month (s51). In s51, the evaluation value calculation unit 33 extracts all records concerning the use of information of the previous month registered in the use history DB 17 and calculates the sum total of the use fees of each record. Thus, the sum of the use fee of each record is the total amount of the use fees of information generated in assaciation with the use of information in each information use device 3, in the previous month.

It should be noted that the information management device 1, for each user, charges a use fee generated by information used by the user.

The information management device 1, corresponding to the total amount (M) of the use fees of information of the previous month calculated in s51, calculates the total amount (total amount of dividends (m)) of the dividends (consideration article defined by the present invention) to be paid to a provider (s52). In s52, an amount (M x a) obtained by multiplying a predetermined ratio α with respect to the total amount (M) of the use fees of the information of the previous month calculated in s51 may be calculated as the total amount (m) of dividends, or an amount (M - N) obtained by subtracting a predetermined certain amount N from the total amount (M) of the use fees of the information of the previous month may be calculated as the total amount (m) of dividends.

The information management device 1 refers to the use history DB 17 and, for each piece of the information provided from the information provision device 2, calculates the sum total (Z) of the use fee of the information (s53). As described above, for eachpiece of information, the use fee is updated corresponding to the degree of received benefit at an appropriate timing (update timing of the management information DB 15 in the above example), so that the sum total (Z) of the use fee of each piece of information is not proportional to the number of times in which the information has been used in the information use device 3.

The information management device 1, for each piece of the information provided from the information provision device 2, calculates dividends (z) corresponding to the sum total (Z) of the use fees of information of the previous month calculated in s53 (s54). In s54, for each piece of information, a dividend (z) is calculated by: a dividend (z) = the total amount (m) of dividends x sum total (Z) of use fee / the total amount (M) of use fees. This dividend (z) is equivalent to the magnitude of the evaluation value of information defined by the present invention.

The information management device 1, for each provider, regarding the information that the provider provides, calculates the total amount of the dividends (z) calculated in s54 (s55). In s55, for each provider, a dividend to be paid to the provider is calculated. Specifically, in a case in which one provider provides a plurality of pieces of information, the sum total of the dividends to be paid to this provider is calculated.

The information management device 1, for each provider, settles the total amount of the dividends (z) calculated in s55 with respect to the provider (s56). In s56, a payment process in which the total amount of the dividends (z) calculated in s55 is paid to a bank account and the like that the provider designates in advance.

In this way, by execution of this settlement process, with respect to each provider, the dividend (z) corresponding to the evaluation value of the information that the provider has provided can be settled.

In addition, for each piece of information, corresponding to the degree of received benefit of the information, the use fee of the relevant information is determined, so that the magnitude of the use fee of each piece of information can be made appropriate. Moreover, the magnitude of the evaluation value with respect to provided information can be determined in consideration of the use performance of the information. Thus, an information provider is not made to feel dissatisfied.

Hereinafter, in the above system, description will be made of some specific examples of information that a provider provides to the information management device 1, and some use examples of the information.
(1) A provider provides (transmits) image information concerning an image of a service area, the image being imaged by the information provision device 2 such as a mobile phone together with information such as an imaging place (latitude, longitude) and an imaging time in the form of text data, to the information management device 1. Through the use of this information, a user who confirms the congestion degree of the service area and judges whether or not to use this service area operates an information use device 3 and receives the information (imaged image of the service area) from the information management device 1 and confirms the congestion degree.
(2) A provider provides (transmits) image information concerning an imaged image of a place in which road construction is conducted, the image being imaged by the information provision device 2 such as a mobile phone, together with information such as the place (latitude, longitude) in which the road construction is conducted and an imaging time in the form of text data, to the information management device 1. This information, can be used to show a place in which construction work is conducted on a map. A business operator who desires to know the state of the construction work may also use this information. In addition, the use fee (piece rate value) of the provided information can be determined corresponding to, for example, the degree of received benefit of a user who desires to use the state of road construction for navigation or a case in which the information is information that a business operator who desires to grasp the state of road construction could not know (unregistered construction, for example). Moreover, regarding one road construction, in a case in which information on the road construction is provided from a plurality of providers, the use fee may be determined according to time when the information was provided. Furthermore, a user may request provider to provide data of a place that the user desires to know. In such a case, the use fee of the information of the provider who has promptly responded to the request may be set higher.
(3) Aprovideradditionallyprovides: a price display signboard at a gas station imaged by the information provision device 2 such as a mobile phone, positional information of the gas station, and the imaging time. The information management device 1 performs an image process and reads the price information of the imaged price display signboard. In such a case, as information is newer, the use fee of the information may be set higher. As an image is more easily image-processed, the use fee may be set higher.
(4) A provider images a parking lot and provides an image of the parking lot with positional information and time. The information management device 1 executes the image process and assesses the state of a vacant taxi. The use fee of information, in this case, may be set higher as the information is newer or may be set higher as an image is more easily image-processed. An owner of a parking lot can be a provider and images a parking space with a fixed camera and can also provide the image of the parking space to a system. A benefit recipient (parking lot manager) owing to the guidance of the information of the state of a vacant taxi may incur a part of a consideration to a provider in accordance with a contract.
(5) A provider provides information such as a sagged road, a cracked structure, or a falling object together with positional information and an imaging time in the form of an image or text data, to the information management device 1. The inspection information of a specialized customer engineer may also be additionally provided to the information management device 1. The information management device 1, based on the reliability, novelty, and benefit of information, evaluates the information and assesses the use fee of the information.
(6) A provider provides the congestion degree of a train that the provider has boarded in addition to positional information and an imaging time in the form of an image or text data, to the information management device 1. Information from a congestion degree measuring sensor installed in the train, a cabin monitoring camera, and a human sensor, for example, may also be additionally provided to the information management device 1. The information management device 1, fromvarious types of information that has been provided, estimates a congestion degree in a cabin and provides the result to an application (information use device 3) that provides the congestion degree in a cabin as information.

It should be noted that a provider may provide an image imaged by not only a mobile terminal but an in-vehicle camera and the like to the information management device 1. In such a case, the provider, while driving a vehicle, may set an image imaged by the in-vehicle camera so as to be automatically provided to the information management device 1 by using a navigation device and the like.

### Reference Signs List

- 1: Information management device
- 2: Information provision device
- 3: Information use device
- 5: Network
- 11: Control unit
- 12 (12a, 12b): Communication unit
- 13: Provider contract database
- 14: User contract database
- 15: Management information database
- 16: Information record database
- 17: Use history database
- 31: Information selection unit
- 32: Piece rate value determination unit
- 33: Evaluation value calculation unit
- 34: Settlement unit

## Claims

1. An information management device comprising:
a provision side information storage unit that, regarding information provided from an information provision device connected in a communicable manner through a network, stores provision side information including a use restriction of the information;
a use side information storage unit that, regarding information of which use is desired by an information use device connected in a communicable manner through the network, stores use side information including a use mode of the information;
an information selection unit that, when receiving, from the information use device, a use request of the information provided from the information provision device, selects, as information to be transmitted to the information use device, information of which use is not restricted with respect to the use mode of the information included in the use request received this time, based on the provision side information stored in the provision side information storage unit and the use side information stored in the use side information storage unit;
a transmission unit that transmits the information selected by the information selection unit to the information use device; and
an evaluation value calculation unit that, regarding the information provided from the information provision device, calculates an evaluation value based on transmission performance that the transmission unit has transmitted the information to the information use device.

2. Information management device according to claim 1, further comprising a settlement unit that, regarding the information provided from the information provision device, makes a settlement according to a magnitude of the evaluation value calculated by the evaluation value calculation unit.

3. The information management device according to claim 1 or 2, wherein
the information selection unit, in a case in which there are a plurality of pieces of information of which use is not restricted with respect to the use mode of the information included in the use request received from the information use device, transmits a brief summary of the pieces of information to the information use device and selects information designated by the information use device as information to be transmitted.

4. The information management device according to any one of claims 1 to 3, further comprising an information storage unit that stores the information provided from the information provision device and a number of times in which the transmission unit has transmitted the information to the information use device that are associated with each other, wherein
the evaluation value calculation unit calculates the magnitude of the evaluation value with respect to the information by using a number of transmission times of the information.

5. The information management device according to any one of claims 1 to 4, further comprising a piece rate value determination unit that determines a piece rate value of the information provided from the information provision device, wherein
the evaluation value calculation unit, using the piece rate value of the information determined by the piece rate value determination unit, calculates the magnitude of the evaluation value with respect to the information.

6. A network system, comprising :
a plurality of information provision devices that provide information;
a plurality of information use devices that use the information provided from the plurality of the information provision devices; and
an information management device that manages and relays the information between the information provision devices and the information use devices, the plurality of information provision devices, the plurality of information use devices, and the information management device being connected in a communicable manner through a network, wherein
the information management device including:
a provision side information storage unit that, regarding the information provided from the information provision devices, stores provision side information including a use restriction of the information;
a use side information storage unit that, regarding information of which use is desired by the information use devices, stores use side information including a use mode of the information;
an information selection unit that, when receiving, from the information use devices, a use request of the information provided from the information provision devices, selects, as information to be transmitted to the information use devices, information of which use is not restricted with respect to the use mode of the information included in the use request received this time, based on the provision side information stored in the provision side information storage unit and the use side information stored in the use side information storage unit;
a transmission unit that transmits the information selected by the information selection unit to the information use devices; and
an evaluation value calculation unit that, regarding the information provided from the information provision devices, calculates an evaluation value based on transmission performance that the transmission unit has transmitted the information to the information use devices.

7. An information management program that causes a computer to execute steps comprising:
an information selection step of:
storing, in a provision side information storage unit, regarding information provided from an information provision device connected in a communicable manner through a network, provision side information including a use restriction of the information;
storing, in a use side information storage unit, regarding information of which use is desired by an information use device connected in a communicable manner through the network, use side information including a use mode of the information;
and
selecting, when receiving, from the information use device, a use request of the information provided from the information provision device, information of which use is not restricted with respect to the use mode of the information included in the use request received this time, as information to be transmitted to the information use device, based on the provision side information stored in the provision side information storage unit and the use side information stored in the use side information storage unit;
a transmission step of transmitting the information selected by the information selection step to the information use device; and
an evaluation value calculation step of, regarding the information provided from the information provision device, calculating an evaluation value based on transmissian performance that the transmission step has transmitted the information to the information use device.

8. An information management method that causes a computer to execute steps comprising:
an information selection step of:
storing, in a provision side information storage unit, regarding information provided from an information provision device connected in a communicable manner through a network, provision side information including a use restriction of the information;
storing, in a use side information storage unit, regarding information of which use is desired by an information use device connected in a communicable manner through the network, use side information including a use mode of the information; and
selecting, when receiving, from the information use device, a use request of the information provided from the information provision device, information of which use is not restricted with respect to the use mode of the information included in the use request received this time, as information to be transmitted to the information use device, based on the provision side information stored in the provision side information storage unit and the use side information stored in the use side information storage unit;
a transmission step of transmitting the information selected by the information selection step to the information use device; and
an evaluation value calculation step of, regarding the information provided from the information provision device, calculating an evaluation value based on transmission performance that the transmission step has transmitted the information to the information use device.

## Amended claims

### Amended claims under Art. 19.1 PCT

1. An information management device comprising:
a provision side information storage unit that, regarding information provided from an information provision device connected in a communicable manner through a network, stores provision side information including a use restriction of the information;
a use side information storage unit that, regarding information of which use is desired by an information use device connected in a communicable manner through the network, stores use side information including a use mode of the information;
a communication unit that receives a use request of information from the information use device;
an information selection unit that compares the use mode of the information included in the use side information corresponding to the use request of the information received by the communication unit with the use restriction of the information included in the provision side information stored in the provision side information storage unit and selects, as information to be transmitted to the information use device, information of which use is not restricted;
a transmission unit that transmits the information selected by the information selection unit to the information use device; and
an evaluation value calculation unit, that, regarding the information provided from the information provision device, calculates an evaluation value based on transmission performance that the transmission unit has transmitted the information to the information use device.

2. The information management device according to claim 1, further comprising a settlement unit that, regarding the information provided from the information provision device, makes a settlement according to a magnitude of the evaluation value calculated by the evaluation value calculation unit.

3. The information management device according to claim 1 or 2, wherein
the information selection unit, in a case in which there are a plurality of pieces of information of which use is not restricted with respect to the use mode of the information included in the use request received from the information use device, transmits a brief summary of the pieces of information to the information use device and selects information designated by the information use device as information to be transmitted.

4. The information management device according to any one of claims 1 to 3, further comprising an information storage unit that stores the information provided from the information provision device and a number of times in which the transmission unit has transmitted the information to the information use device that are associated with each other, wherein
the evaluation value calculation unit calculates the magnitude of the evaluation value with respect to the information by using a number of transmission times of the information.

5. The information management device according to any one of claims 1 to 4, further comprising a piece rate value determination unit that determines a piece rate value of the information provided from the information provision device, wherein
the evaluation value calculation unit, using the piece rate value of the information determined by the piece rate value determination unit, calculates the magnitude of the evaluation value with respect to the information.

6. A network system, comprising:
a plurality of information provision devices that provide information;
a plurality of information use devices that use the information provided from the plurality of the information provision devices; and
an information management device that manages and relays the information between the information provision devices and the information use devices, the plurality of information provision devices, the plurality of information use devices, and the information management device being connected in a communicable manner through a network, wherein
the information management device including:
a provision side information storage unit that, regarding the information provided from the information provision devices, stores provision side information including a use restriction of the information;
a use side information storage unit that, regarding information of which use is desired by the information use devices, stores use side information including a use mode of the information;
a communication unit that receives a use request of information from the information use device;
an information selection unit that compares the use mode of the information included in the use side information corresponding to the use request of the information received by the communication unit with the use restriction of the information included in the provision side information stored in the provision side information storage unit and selects, as information to be transmitted to the information use devices, information of which use is not restricted;
a transmission unit that transmits the information selected by the information selection unit to the information use devices; and
an evaluation value calculation unit that, regarding the information provided from the information provision devices, calculates an evaluation value based on transmission performance that the transmisson unit has transmitted the information to the information use devices.

7. An information management program that causes a computer to execute steps comprising:
an information selection step of:
storing, in a provision side information storage unit, regarding information provided from an information provision device connected in a communicable manner through a network, provision side information including a use restriction of the information;
storing, in a use side information storage unit, regarding information of which use is desired by an information use device connected in a communicable manner through the network, use side information including a use mode of the information; and
comparing, when the communication unit receives a use request of the information from the information use device, the use mode of the information included in the use side information corresponding to the use request of the information received by the communication unit with the use restriction of the information included in the provision side information stored in the provision side information storage unit and selecting information of which use is not restricted as information to be transmitted to the information use device;
a transmission step of transmitting the information selected by the information selection step to the information use device; and
an evaluation value calculation step of, regarding the information provided from the information provision device, calculating an evaluation value based on transmission performance that the transmission step has transmitted the information to the information use device.

8. An information management method that causes a computer to execute steps comprising:
an information selection step of:
storing, in a provision side information storage unit, regarding information provided from an information provision device connected in a communicable manner through a network, provision side information including a use restriction of the information;
storing, in a use side information storage unit, regarding information of which use is desired by an information use device connected in a communicable manner through the network, use side information including a use mode of the information; and
comparing, when the communication unit receives a use request of the information from the information use device, the use mode of the information included in the use side information corresponding to the use request of the information received by the communication unit with the use restriction of the information included in the provision side information stored in the provision side information storage unit and selecting information of which use is not restricted as information to be transmitted to the information use device;
a transmission step of transmitting the information selected by the information selection step to the information use device; and
an evaluation value calculation step of, regarding the information provided from the information provision device, calculating an evaluation value based on transmission performance that the transmission step has transmitted the information to the information use device.
